(19) Europäisches Patentamt / European Patent Office / Office européen des brevets

(11) **EP 4 322 253 A1**

(12) **EUROPEAN PATENT APPLICATION**
published in accordance with Art. 153(4) EPC

(43) Date of publication:
**14.02.2024 Bulletin 2024/07**

(21) Application number: **22911908.6**

(22) Date of filing: **21.12.2022**

(51) International Patent Classification (IPC):
*H01M 4/36* (2006.01)    *H01M 4/58* (2010.01)
*H01M 4/52* (2010.01)    *H01M 4/38* (2006.01)
*H01M 4/62* (2006.01)

(52) Cooperative Patent Classification (CPC):
**H01M 10/0525; H01M 4/137; H01M 4/1397;**
**H01M 4/5825; Y02E 60/10**

(86) International application number:
**PCT/KR2022/020915**

(87) International publication number:
**WO 2023/121275 (29.06.2023 Gazette 2023/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **24.12.2021  KR 20210187191**
         **19.12.2022  KR 20220178234**

(71) Applicant: **LG Energy Solution, Ltd.**
**Seoul 07335 (KR)**

(72) Inventors:
• **KWON, O Jong**
**Daejeon 34122 (KR)**
• **KIM, Ju Ryoun**
**Daejeon 34122 (KR)**
• **CHOI, Jung Hun**
**Daejeon 34122 (KR)**
• **JANG, Min Chul**
**Daejeon 34122 (KR)**
• **KIM, Ki Woong**
**Daejeon 34122 (KR)**

(74) Representative: **Hoffmann Eitle**
**Patent- und Rechtsanwälte PartmbB**
**Arabellastraße 30**
**81925 München (DE)**

(54) **CATHODE SLURRY COMPOSITION, CATHODE MANUFACTURED USING SAME, AND LITHIUM SECONDARY BATTERY**

(57)    A positive electrode slurry composition includes a positive electrode active material, a binder, a dispersant, and a solvent, wherein the positive electrode active material includes lithium iron phosphate having a carbon coating layer on the surface thereof, and the binder includes polyvinylidene fluoride satisfying the following Expression 1

[Expression 1]

$$0 \leq \{(2A+B)/(C+D)\} \times 100 < 0.2$$

wherein A, B, C, and D are the integrated areas of respective peaks exhibited at 11.5 ppm to 12.8 ppm, 3.9 ppm to 4.2 ppm, 2.6 ppm to 3.2 ppm, and 2.1 ppm to 2.35 ppm as measured by $^1$H-NMR of the polyvinylidene fluoride.

[FIG. 3]

**Description**

[Technical Field]

The present application claims priority to Korean Patent Application No. 10-2021-0187191 filed on December 24, 2021, and Korean Patent Application No. 10-2022-0178234, filed on December 19, 2022, the disclosures of which are incorporated herein by reference.

The present disclosure relates to a positive electrode slurry composition, and a positive electrode and lithium secondary battery manufactured using the same, and more specifically, to a positive electrode slurry composition having smooth electrode coating processability, and a positive electrode and lithium secondary battery manufactured using the same.

[Background]

As the technology development and the demand for electric vehicles and energy storage systems (ESSs) increase, the demand for batteries as an energy source is rapidly increasing, and accordingly, various studies on batteries capable of meeting various needs have been conducted. Particularly, studies on lithium secondary batteries which exhibit excellent lifetime and cycle characteristics while having a high energy density as a power source for the device are being actively conducted.

As a positive electrode active material of the lithium secondary battery, lithium cobalt-based oxides, lithium nickel cobalt manganese-based oxides, lithium iron phosphate, and the like have been used.

Among those listed above, lithium iron phosphate is inexpensive because it is abundant in resources and contains iron, which is a low-cost material. Also, since lithium iron phosphate has low toxicity, environmental pollution can be reduced when lithium iron phosphate is used. Furthermore, since lithium iron phosphate has an olivine structure, the active material structure can be stably maintained at a high temperature as compared to lithium transition metal oxides having a layered structure. Accordingly, high-temperature stability and high-temperature lifetime characteristics can be improved.

However, lithium iron phosphate has a problem of poor lithium mobility and low electrical conductivity compared to lithium transition metal oxides such as lithium nickel cobalt manganese oxides. Accordingly, conventionally, lithium iron phosphate has been used after lithium ion mobility is improved by shortening the movement route of lithium by reducing an average particle diameter of lithium iron phosphate and electrical conductivity is improved by coating the surface of lithium iron phosphate with carbon.

However, since the carbon coating layer formed on the surface of lithium iron phosphate is bonded to the functional groups of a binder, there is a problem of gelation of a positive electrode slurry composition in a preparation process of a positive electrode slurry. Also, when the specific surface area of lithium iron phosphate particles is increased due to the small particle size of the lithium iron phosphate, the area of a site where the bonding may occur increases, and thus the gelation occurs more severely. Accordingly, the application of the composition onto a current collector becomes difficult, and even when the composition is applied, the thickness and/or surface of a positive electrode active material layer are/is not uniformly formed, and thus the output performance and lifetime characteristics of the manufactured battery may be degraded.

Therefore, a technology for suppressing the gelation of the positive electrode slurry composition including lithium iron phosphate and a binder is required.

[Technical Problem]

The present disclosure is directed to providing a positive electrode slurry composition having smooth electrode coating processability by suppressing the gelation of a positive electrode slurry including lithium iron phosphate.

The present disclosure is also directed to providing a positive electrode manufactured using the positive electrode slurry composition and a lithium secondary battery including the positive electrode.

[Technical Solution]

According to one embodiment of the present invention, there is provided a positive electrode slurry composition which includes a positive electrode active material, a binder, a dispersant, and a solvent, wherein the positive electrode active material includes lithium iron phosphate having a carbon coating layer on the surface thereof, and the binder includes polyvinylidene fluoride satisfying Expression 1 below.

According to another embodiment of the present invention, there is provided a positive electrode which includes a positive electrode current collector and a positive electrode active material layer positioned on at least one surface of the positive electrode current collector, wherein the positive electrode active material layer includes a positive electrode active material, a binder, and a dispersant, the positive electrode active material includes lithium iron phosphate having a carbon coating layer on the surface thereof, and the binder includes polyvinylidene fluoride satisfying Expression 1 below.

According to still another embodiment of the present invention, there is provided a lithium secondary battery which includes a positive electrode, a negative electrode, a separator, and an electrolyte, wherein the positive electrode includes a positive electrode active material, a binder, and a dispersant, the positive electrode active material includes lithium iron phosphate having a carbon coating layer on the surface thereof, and the binder includes polyvinylidene fluoride satisfying the following Expression 1.

$$[\text{Expression 1}]$$

$$0 \le \{(2A+B)/(C+D)\} \times 100 < 0.2$$

(A, B, C, and D are the integrated areas of respective peaks exhibited at 11.5 ppm to 12.8 ppm, 3.9 ppm to 4.2 ppm, 2.6 ppm to 3.2 ppm, and 2.1 ppm to 2.35 ppm as measured by $^1$H-NMR of the polyvinylidene fluoride)

[Advantageous Effects]

Since a positive electrode slurry composition according to the present disclosure includes polyvinylidene fluoride satisfying Expression 1 as a binder, hydrogen bonding between hydrogen included in a carbon coating layer on the surface of lithium iron phosphate and functional groups included in the binder is reduced, and thus the gelation of the composition can be prevented.

In addition, since the gelation of the positive electrode slurry composition is prevented, excellent coating processability can be exhibited.

Additionally, since a positive electrode formed of the positive electrode slurry composition includes a positive electrode active material layer having minimized surface defects and uniform thickness, a lithium secondary battery manufactured using the positive electrode can exhibit excellent output performance and excellent lifetime characteristics.

[Brief Description of the Drawings]

FIG. 1 is a $^1$H NMR graph of polyvinylidene fluoride used in Examples 1 to 3.
FIG. 2 is a $^1$H NMR graph of polyvinylidene fluoride used in Comparative Example 1.
FIG. 3 a graph showing a result of measuring the viscosity of each positive electrode slurry composition prepared in Examples 1 to 3 and Comparative Example 1 according to a shear rate.

[Detailed Description]

Advantages and features of the present invention and methods for achieving the same will be apparent by the exemplary embodiments described below in detail with reference to the accompanying drawings. However, the present invention is not limited to the exemplary embodiments described below and may be implemented in various different forms. Rather, the exemplary embodiments have been provided to make the disclosure of the present invention thorough and complete and to fully inform the scope of the present invention to those of ordinary skill in the art to which the present invention pertains, and the present invention is defined only by the scope of the claims. Throughout the specification, like reference numerals denote like elements.

All terms used herein, including technical or scientific terms, should be interpreted as having the same meaning as commonly understood by one of ordinary skill in the art to which the present invention pertains unless otherwise defined. Therefore, terms such as those defined in the commonly used dictionaries are not to be interpreted in an ideal or overly formal sense unless explicitly defined.

Terms used herein are for describing the exemplary embodiments and are not intended to limit the present invention. In this specification, the singular form may include the plural form unless specifically stated in the phrase. As used herein, the terms/term "comprises" and/or "comprising" do/does not preclude the presence or addition of one or more other components in addition to the stated components.

In this specification, when a component is referred to as "containing", "including", "comprising", or "having" another component, it is to be understood that the component does not exclude other components but may include other components as well, unless specifically stated otherwise.

In this specification, reference to "A and/or B" refers to A, B, or A and B.

In this specification, "%" refers to wt% unless clearly described otherwise.

In this specification, $D_{50}$ refers to a particle diameter corresponding to a cumulative volume of 50% in the particle diameter distribution curve. The $D_{50}$ may be measured, for example, by a laser diffraction method. The laser diffraction method generally enables measurement of a particle diameter ranging from submicron to several mm and may obtain a result with high reproducibility and high resolution.

In this specification, a "specific surface area" is measured by a BET method and may be specifically calculated from the amount of nitrogen gas adsorbed at a liquid nitrogen temperature (77 K) using BELSORP-mini II commercially available from BEL Japan.

In this specification a "weight-average molecular weight (Mw)" refers to a conversion value with respect to standard polystyrene measured through gel permeation chromatography (GPC). Specifically, the weight-average molecular weight is a value obtained by converting a value measured under the following conditions using GPC, and standard polystyrene of an Agilent system is used to make a calibration curve.

<Measurement conditions>

Analyzer: Agilent GPC (Agilent 1200 series, US)
Column: two connected PL Mixed B columns
Column temperature: 40 °C
Eluent: Tetrahydrofuran
Flow rate: 1.0 mL/min
Concentration: ~ 1 mg/mL (100 $\mu$L injection)

In this specification, the $^1$H NMR of polyvinylidene fluoride (PVdF) is measured under the conditions of ns=1k, dl=3s, pulse sequence zg30, a temperature of 298 K, and a DMSO-$d_6$ solvent using an NMR instrument (Bruker 600 MHz commercially available from Bruker).

In this specification, the shear viscosity of a positive electrode slurry composition is measured using a rheometer (DHR2 commercially available from TA Instruments) after 10 ml of the positive electrode slurry composition is input into a concentric cylinder-type accessory of the rheometer at 25 °C.

Hereinafter, embodiments of the present invention will be described in detail.

**Positive electrode slurry composition**

A positive electrode slurry composition according to an embodiment of the present invention includes a positive electrode active material, a binder, a dispersant, and a solvent, wherein the positive electrode active material includes lithium iron phosphate having a carbon coating layer on the surface thereof, and the binder includes polyvinylidene fluoride satisfying the following Expression 1.

[Expression 1]

$$0 \leq \{(2A+B)/(C+D)\} \times 100 < 0.2$$

(A, B, C, and D are the integrated areas of respective peaks exhibited at 11.5 ppm to 12.8 ppm, 3.9 ppm to 4.2 ppm, 2.6 ppm to 3.2 ppm, and 2.1 ppm to 2.35 ppm as measured by $^1$H-NMR of the polyvinylidene fluoride)

In a preparation process of a positive electrode slurry composition, a mixture including the positive electrode active material, the binder, a conductive material, the dispersant, and the solvent is stirred, and in the stirring process, a shear force is applied to the positive electrode slurry composition. In this case, since the carbon coating layer formed on the surface of lithium iron phosphate is bonded to functional groups of the binder, there is a problem of gelation of the positive electrode slurry composition in a preparation process of a positive electrode slurry. Also, when the specific surface area of lithium iron phosphate particles is increased due to the small particle size of the lithium iron phosphate, the area of a site where the bonding may occur increases, and thus the gelation occurs more severely. Accordingly, application of the composition onto a current collector becomes difficult, and even when the composition is applied, the thickness and/or surface of a positive electrode active material layer are/is not uniformly formed, and thus the output performance and lifetime characteristics of the manufactured battery may be degraded.

As a result of prolonged research to solve the above problems, the inventors of the present disclosure have found that the use of a binder satisfying a specific condition along with lithium iron phosphate reduces hydrogen bonding between hydrogen included in the carbon coating layer on the surface of lithium iron phosphate and functional groups included in the binder, and thus a gelation phenomenon can be suppressed. This will be described in detail below.

**(1) Positive electrode active material**

The positive electrode active material includes lithium iron phosphate, and the lithium iron phosphate may be a compound represented by the following Chemical Formula 1. When the positive electrode active material includes the lithium iron phosphate, the stability of a positive electrode including the positive electrode active material is substantially improved, and thus ignition of a lithium secondary battery including the positive electrode can be substantially reduced.

The lithium iron phosphate may be a compound represented by the following Chemical Formula 1.

[Chemical Formula 1] $\quad\quad Li_{1+a}Fe_{1-x}M_x(PO_{4-b})X_b$

(in Chemical Formula 1, M includes any one or two or more elements selected from the group consisting of Al, Mg, Ni, Co, Mn, Ti, Ga, Cu, V, Nb, Zr, Ce, In, Zn, and Y, X includes any one or two or more elements selected from the group consisting of F, S, and N, and a, b, and x satisfy $-0.5 \leq a \leq 0.5$, $0 \leq b \leq 0.1$, and $0 \leq x \leq 0.5$, respectively)

For example, the lithium iron phosphate may be $LiFePO_4$.

Meanwhile, the positive electrode active material may include a carbon coating layer formed on the surface of the lithium iron phosphate. When the carbon coating layer is formed on the surface of lithium iron phosphate, electrical conductivity is enhanced, and thus the resistance characteristics of the positive electrode can be improved.

The carbon coating layer may be formed using at least one raw material selected from the group consisting of glucose, sucrose, lactose, starch, an oligosaccharide, a polyoligosaccharide, fructose, cellulose, a furfuryl alcohol polymer, a block copolymer of ethylene and ethylene oxide, a vinyl-based resin, a cellulose-based resin, a phenolic resin, a pitch-based resin, and a tar-based resin. Specifically, the carbon coating layer may be formed by mixing the raw materials with the lithium iron phosphate and thermally treating the resulting mixture.

The carbon coating layer may have a thickness of 500 nm or less, specifically 5 nm to 400 nm, and more specifically 5 nm to 300 nm. When the thickness of the carbon coating layer satisfies the above-described range, the conductivity of the positive electrode active material can be improved, and an increase in resistance, which is caused by decreasing lithium ion mobility due to an excessively thick carbon coating layer, can be prevented.

The lithium iron phosphate may have an average particle diameter $D_{50}$ of 0.8 $\mu$m to 20.0 $\mu$m, specifically 0.9 $\mu$m to 10.0 $\mu$m, and more specifically 0.9 $\mu$m to 3.0 $\mu$m. When the average particle diameter $D_{50}$ of the lithium iron phosphate satisfies the above-described range, lithium mobility is improved in lithium iron phosphate, and thus the charging/discharging characteristics of a battery can be improved.

The positive electrode active material may have a BET specific surface area of 5 $m^2$/g to 20 $m^2$/g, specifically 7 $m^2$/g to 18 $m^2$/g, and more specifically 9 $m^2$/g to 16 $m^2$/g. The above-described range is a low BET specific surface area range compared to typical lithium iron phosphate. When the above-described range is satisfied, agglomeration of the lithium iron phosphate can be effectively suppressed even in a positive electrode slurry composition having a relatively small amount of a dispersant.

The positive electrode active material may be included in an amount of 91.0 wt% to 98.0 wt%, specifically 91.5 wt% to 97.0 wt%, and more specifically 92.0 wt% to 97.0 wt% based on the total solid content of the positive electrode slurry composition. When the content of the positive electrode active material satisfies the above-described range, the energy density per weight/volume of the positive electrode can be increased.

**(2) Binder**

The binder serves to aid in the binding of the active material, the conductive material, and the like to one another and to a current collector. The binder may include polyvinylidene fluoride (PVdF) satisfying the following Expression 1.

$$[\text{Expression 1}]$$

$$0 \leq \{(2A+B)/(C+D)\} \times 100 < 0.2$$

In Expression 1, A, B, C, and D refer to the integrated areas of respective peaks in the $^1$H-NMR spectrum of PVdF, A is the integrated area of a peak exhibited in the range of 11.5 ppm to 12.8 ppm, B is the integrated area of a peak exhibited in the range of 3.9 ppm to 4.2 ppm, C is the integrated area of a peak exhibited in the range of 2.6 ppm to 3.2 ppm, and D is the integrated area of a peak exhibited in the range of 2.1 ppm to 2.35 ppm.

In this case, the section of 11.5 ppm to 12.8 ppm refers to the $^1$H-NMR peak range of the functional group (COOH) included in PVdF, and the section of 3.9 ppm to 4.2 ppm refers to the $^1$H-NMR peak range of the functional group (OCH$_2$) included in PVdF. Also, the section of 2.6 ppm to 3.2 ppm refers to the $^1$H-NMR peak range of the PVdF monomer bonded in a head-to-head manner, and the section of 2.1 ppm to 2.35 ppm refers to the $^1$H-NMR peak range of the PVdF monomer bonded in a head-to-tail manner.

Meanwhile, PVdF satisfying Expression 1 means that a relatively small amount of polar functional groups such as COOH and OCH$_2$ is included in PVdF.

When PVdF included in the binder in the positive electrode slurry composition does not satisfy Expression 1, functional groups (e.g., COOH and OCH$_2$) in the binder and hydrogen in the carbon coating layer form many hydrogen bonds, and thus the gelation of the positive electrode slurry composition may occur.

On the other hand, when PVdF included in the binder in the positive electrode slurry composition satisfies Expression 1, a small amount of the functional groups is included in the binder, and thus the number of hydrogen bonds between the functional groups and hydrogen in the carbon coating layer is decreased. Accordingly, the gelation of the positive electrode slurry composition can be prevented, coating processability of the positive electrode slurry composition can be enhanced, and the thickness and/or surface of the applied positive electrode active material layer can be uniformly formed.

Particularly, the effect of preventing the gelation of the positive electrode slurry composition is remarkable when lithium iron phosphate is used as a positive electrode active material. Specifically, since lithium iron phosphate has a small average particle diameter and a large specific surface area compared to a conventional positive electrode active material such as a lithium nickel cobalt manganese-based oxide, the area of a site where the hydrogen bonding may occur increases, and thus the gelation is highly likely to occur more severely. For this reason, when PVdF included in the binder in the positive electrode slurry composition satisfies Expression 1, the likelihood of gelation in a positive electrode slurry composition using lithium iron phosphate as a positive electrode active material can be substantially reduced.

Preferably, when PVdF included in the binder satisfies Expression 1, the binder may be a homopolymer. For example, when the binder is a PVdF homopolymer, the above-described polar functional groups are not present in the binder, and thus a hydrogen bond between the carbon coating layer and the binder is not formed. Accordingly, the gelation of the positive electrode slurry composition can be prevented.

The binder may have a weight-average molecular weight of 20,000 g/mol to 1,200,000 g/mol, specifically 100,000 g/mol to 1,000,000 g/mol, and more specifically 400,000 g/mol to 980,000 g/mol. When the weight-average molecular weight of the binder satisfies the above-described range, the positive electrode slurry composition can have a viscosity suitable for a coating process, and as a result, the uniformity of a positive electrode active material layer formed of the composition can be ensured, and positive electrode adhesion can be improved.

The binder may be included in an amount of 1.8 wt% to 4.0 wt%, specifically 1.8 wt% to 3.8 wt%, and more specifically 2.0 wt% to 3.7 wt% based on the total solid content of the positive electrode slurry composition. When the content of the binder satisfies the above-described range, a contact area between the binder and the lithium iron phosphate is increased, and thus excellent positive electrode adhesion can be ensured.

**(3) Dispersant**

The dispersant suppresses the lithium iron phosphate from being excessively agglomerated in the positive electrode slurry composition and allows the lithium iron phosphate to be effectively dispersed in the prepared positive electrode active material layer.

The dispersant may include a hydrogenated nitrile-based copolymer. Specifically, the dispersant may be a hydrogenated nitrile-based copolymer.

Specifically, the hydrogenated nitrile-based copolymer may be a copolymer including a structural unit derived from an $\alpha,\beta$-unsaturated nitrile and a structural unit derived from a hydrogenated conjugated diene or a copolymer including a structural unit derived from an $\alpha,\beta$-unsaturated nitrile, a structural unit derived from a conjugated diene, and a structural unit derived from a hydrogenated conjugated diene. As the $\alpha,\beta$-unsaturated nitrile monomer, for example, acrylonitrile, methacrylonitrile, and the like may be used, which may be used alone or in combination of two or more thereof. As the conjugated diene-based monomer, for example, a C4 to C6 conjugated diene-based monomer such as 1,3-butadiene, isoprene, 2,3-methyl butadiene, and the like may be used, which may be used alone or in combination of two or more thereof.

More specifically, the hydrogenated nitrile-based copolymer may be a hydrogenated nitrile butadiene rubber (H-NBR).

The dispersant may have a weight-average molecular weight of 10,000 g/mol to 150,000 g/mol, preferably 15,000 g/mol to 140,000 g/mol, and more preferably 20,000 g/mol to 130,000 g/mol.

When the weight-average molecular weight of the dispersant satisfies the above-described range, the solvent wetting and dispersibility of lithium iron phosphate particles are improved, and thus particle agglomeration of lithium iron phosphate can be suppressed. Accordingly, the positive electrode slurry composition can have a low viscosity and also have a high solid content compared to other positive electrode slurry compositions having the same viscosity.

In addition, when the weight-average molecular weight of the dispersant satisfies the above-described range, a conductive material is agglomerated in the form of a sphere in a positive electrode, and thus the surface area of the agglomerated conductive material can be minimized compared to a conductive material agglomerated in the form of a line. As a result, the surface area of a positive electrode active material, which is located adjacent to the agglomerated conductive material and thus does not participate in a lithium intercalation/deintercalation reaction, is minimized, and thus the discharge resistance of a lithium secondary battery manufactured using the positive electrode slurry composition can be lowered.

The dispersant may be included in an amount of 0.1 wt% to 2.0 wt%, specifically 0.2 wt% to 1.8 wt%, and more specifically 0.4 wt% to 1.6 wt% based on the total solid content of the positive electrode slurry composition. When the content of the dispersant satisfies the above-described range, agglomeration of the positive electrode active material is suppressed, and thus the gelation of the positive electrode slurry composition can be prevented.

The dispersant may be included in an amount of 40 parts by weight or more, specifically 45 parts by weight to 60 parts by weight, and more specifically 50 parts by weight to 60 parts by weight with respect to 100 parts by weight of the binder in the positive electrode slurry composition. When the content of the dispersant in the positive electrode slurry composition satisfies the above-described range, agglomeration of the positive electrode active material is suppressed, and thus the gelation of the positive electrode slurry composition can be prevented.

### (4) Conductive material

Meanwhile, as necessary, the positive electrode slurry composition may further include a conductive material in addition to the positive electrode active material, binder, dispersant, and solvent.

The conductive material is not particularly limited as long as it does not cause a chemical change in a battery and has conductivity. For example, graphite; carbon-based materials such as carbon black, acetylene black, Ketjen black, channel black, furnace black, lamp black, thermal black, and the like; conductive fibers such as carbon fibers, metal fibers, and the like; fluorinated carbon; metal powders such as aluminum, nickel powders, and the like; conductive whiskers such as zinc oxide, potassium titanate, and the like; conductive metal oxides such as titanium oxide and the like; and conductive materials such as polyphenylene derivatives and the like may be used. Specific examples of a commercially available conductive material include acetylene black-based products (Chevron Chemical Company), Denka black (Denka Singapore Private Limited), Gulf Oil Company products, Ketjen black, EC-based products (Armak Company), Vulcan XC-72 (Cabot Company), Super P (Timcal), and the like.

Preferably, the conductive material may be carbon nanotubes. Since the conductive network of carbon nanotubes may mitigate a migration phenomenon of the binder in a drying process of the positive electrode slurry composition, carbon nanotubes are particularly preferred as the conductive material included in the positive electrode slurry composition of the present disclosure.

The conductive material may be included in an amount of 0.1 wt% to 4.0 wt%, specifically 0.2 wt% to 4.0 wt%, and more specifically 0.6 wt% to 3.5 wt% based on the total solid content of the positive electrode slurry composition. When the above-described range is satisfied, the conductive network of a positive electrode is ensured, and thus the electrical conductivity of the positive electrode can be improved.

### (5) Solvent

The solvent is intended to mix the above-described positive electrode active material, binder, dispersant, and/or conductive material. As the solvent, any solvent that is typically used in the art may be used, and examples thereof include dimethyl sulfoxide (DMSO), isopropyl alcohol, N-methyl-2-pyrrolidone (NMP), acetone, water, and the like, which may be used alone or in combination of two or more thereof.

The solvent may be included in an amount such that the positive electrode slurry composition has an appropriate viscosity and an appropriate solid content. For example, the solvent may be included in an amount such that a solid content in the composition is 40 wt% to 75 wt%, specifically 50 wt% to 70 wt%, and more specifically 55 wt% to 65 wt%. When the solid content in the positive electrode slurry composition satisfies the above-described range, the composition has a coatable level of viscosity, and a positive electrode active material layer formed of the composition has a certain level or more of thickness, and thus energy density can be ensured.

In the case of the positive electrode slurry composition according to an embodiment of the present invention, an inflection point may not appear in the rheological property graph. For example, when the shear viscosity of the positive electrode slurry composition according to a shear rate is measured using a rheometer, an inflection point may not be present on the graph in a shear rate range of $10^{-2.5}$ 1/s to $10^0$ 1/s. Accordingly, a problem such as change of the composition over time, clogging of a filter during composition transfer, or gelation of the composition, which may occur when an inflection point appears on the graph, can be prevented.

**Positive electrode**

Next, a positive electrode according to the present disclosure will be described.

The positive electrode includes a positive electrode current collector and a positive electrode active material layer positioned on at least one surface of the positive electrode current collector. The positive electrode active material layer includes a positive electrode active material, a binder, and a dispersant, the positive electrode active material includes lithium iron phosphate having a carbon coating layer on the surface thereof, and the binder includes polyvinylidene fluoride satisfying the following Expression 1.

[Expression 1]

$$0 \leq \{(2A+B)/(C+D)\} \times 100 < 0.2$$

(A, B, C, and D are the integrated areas of respective peaks exhibited at 11.5 ppm to 12.8 ppm, 3.9 ppm to 4.2 ppm, 2.6 ppm to 3.2 ppm, and 2.1 ppm to 2.35 ppm as measured by $^1$H-NMR of the polyvinylidene fluoride)

In addition, the positive electrode active material layer may further include a conductive material.

The positive electrode may be formed using the above-described positive electrode slurry composition. The positive electrode active material, binder, dispersant, and conductive material have been described above.

The positive electrode current collector is not particularly limited as long as it does not cause a chemical change in a battery and has conductivity. For example, copper, stainless steel, aluminum, nickel, titanium, calcined carbon, or aluminum or stainless steel whose surface has been treated with carbon, nickel, titanium, silver, or the like may be used as the current collector.

The positive electrode current collector may have a thickness of 3 μm to 500 μm and may have fine irregularities formed on the surface thereof to increase the adhesion to a positive electrode active material layer. For example, the positive electrode current collector may be used in any of various forms such as a film, a sheet, a foil, a net, a porous material, a foam, a non-woven fabric, and the like.

The positive electrode active material layer may be positioned on at least one surface of the positive electrode current collector and formed of the above-described positive electrode slurry composition.

The positive electrode may be manufactured by a typical method of manufacturing a positive electrode, except that the above-described positive electrode slurry composition is used. Specifically, the positive electrode may be manufactured by applying the positive electrode slurry composition onto a positive electrode current collector, followed by drying and rolling.

As another method, the positive electrode may be manufactured by laminating, on a positive electrode current collector, a film obtained by casting the positive electrode slurry composition on a separate support and removing it from the support.

**Lithium secondary battery**

Next, a lithium secondary battery according to the present disclosure will be described.

The lithium secondary battery includes a positive electrode, a negative electrode, a separator interposed between the positive electrode and the negative electrode, and an electrolyte.

The positive electrode in the lithium secondary battery has been described above. For example, the positive electrode includes a positive electrode active material, a binder, and a dispersant, the positive electrode active material includes lithium iron phosphate having a carbon coating layer, and the binder includes polyvinylidene fluoride satisfying the following Expression 1.

[Expression 1]

$$0 \leq \{(2A+B)/(C+D)\} \times 100 < 0.2$$

(A, B, C, and D are the integrated areas of respective peaks exhibited at 11.5 ppm to 12.8 ppm, 3.9 ppm to 4.2 ppm, 2.6 ppm to 3.2 ppm, and 2.1 ppm to 2.35 ppm as measured by $^1$H-NMR of the polyvinylidene fluoride)

In addition, the positive electrode may further include a conductive material.

The negative electrode may be manufactured, for example, by preparing a composition for forming a negative electrode, which includes a negative electrode active material, a negative electrode binder, and a negative electrode conductive material, and then applying the composition onto a negative electrode current collector.

The negative electrode active material is not particularly limited, and any compound capable of reversibly intercalating and deintercalating lithium may be used. Specific examples thereof include: carbonaceous materials such as artificial graphite, natural graphite, graphitized carbon fiber, amorphous carbon, high-crystallinity carbon, and the like; (semi)metal-based materials capable of alloying with lithium, such as Si, Al, Sn, Pb, Zn, Bi, In, Mg, Ga, Cd, a Si alloy, a Sn alloy, an Al alloy, and the like; and composites including (semi)metal-based materials and carbonaceous materials. Examples of low-crystallinity carbon include soft carbon and hard carbon, and examples of the high-crystallinity carbon include natural graphite, Kish graphite, pyrolytic carbon, mesophase pitch-based carbon fiber, meso-carbon microbeads, mesophase pitches, and high-temperature calcined carbon such as petroleum or coal tar pitch-derived cokes, which may be used alone or in combination of two or more thereof. Also, as the negative electrode active material, a lithium metal thin film may be used.

The negative electrode conductive material is used to impart conductivity to the electrode, and any conductive material that does not cause a chemical change in a battery and has conductivity may be used without particular limitation. Specific examples thereof include graphite such as natural graphite, artificial graphite, and the like; carbon-based materials such as carbon black, acetylene black, Ketjen black, channel black, furnace black, lamp black, thermal black, carbon fiber, carbon nanotubes, and the like; powders or fibers of metals such as copper, nickel, aluminum, silver, and the like; conductive whiskers such as zinc oxide, potassium titanate, and the like; conductive metal oxides such as titanium oxide and the like; and conductive polymers such as polyphenylene derivatives and the like, which may be used alone or in combination of two or more thereof. The negative electrode conductive material may be typically included in an amount of 1 to 30 wt%, specifically 1 to 20 wt%, and more specifically 1 to 10 wt% with respect to the total weight of a negative electrode active material layer.

The negative electrode binder serves to enhance the cohesion between negative electrode active material particles and the adhesion between the negative electrode active material and the negative electrode current collector. Specific examples thereof include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), a sulfonated EPDM, styrene butadiene rubber (SBR), fluoro-rubber, and various copolymers thereof, which may be used alone or in combination of two or more thereof. The negative electrode binder may be included in an amount of 1 to 30 wt%, specifically 1 to 20 wt%, and more specifically 1 to 10 wt% with respect to the total weight of a negative electrode active material layer.

Meanwhile, the negative electrode current collector is not particularly limited as long as it does not cause a chemical change in a battery and has high conductivity. For example, copper, stainless steel, aluminum, nickel, titanium, calcined carbon, or copper or stainless steel whose surface has been treated with carbon, nickel, titanium, silver, or the like, an aluminum-cadmium alloy, or the like may be used as the negative electrode current collector.

In addition, the negative electrode current collector may typically have a thickness of 3 $\mu$m to 500 $\mu$m. Like the positive electrode current collector, the negative electrode current collector may have fine irregularities formed on the surface thereof to increase the adhesion of a negative electrode active material. For example, the negative electrode current collector may be used in any of various forms such as a film, a sheet, a foil, a net, a porous material, a foam, a non-woven fabric, and the like.

Meanwhile, as the separator in the lithium secondary battery, any separator that is typically used as a separator in a lithium secondary battery may be used without particular limitation, and in particular, a separator that exhibits low resistance to the migration of electrolyte ions and has an excellent electrolyte impregnation ability is preferred. Specifically, a porous polymer film, for example, a porous polymer film made of a polyolefin-based polymer such as an ethylene homopolymer, a propylene homopolymer, an ethylene/butene copolymer, an ethylene/hexene copolymer, an ethylene/methacrylate copolymer, or the like or a stacked structure having two or more layers thereof, may be used. Also, a typical porous non-woven fabric, for example, a non-woven fabric made of high-melting-point glass fiber, polyethylene terephthalate fiber, or the like may be used. In addition, the separator may be a porous thin film having a pore diameter of 0.01 $\mu$m to 10 $\mu$m and a thickness of 5 $\mu$m to 300 $\mu$m.

Meanwhile, in the lithium secondary battery, the electrolyte may include an organic solvent and a lithium salt, which are typically used in an electrolyte, and they are not particularly limited.

As the organic solvent, any solvent that may function as a medium through which ions involved in an electrochemical reaction of a battery can migrate may be used without particular limitation. Specifically, as the organic solvent, an ester-based solvent such as methyl acetate, ethyl acetate, $\gamma$-butyrolactone, $\varepsilon$-caprolactone, or the like; an ether-based solvent such as dibutyl ether, tetrahydrofuran, or the like; a ketone-based solvent such as cyclohexanone or the like; an aromatic hydrocarbon-based solvent such as benzene, fluorobenzene, or the like; or a carbonate-based solvent such as dimethyl carbonate (DMC), diethyl carbonate (DEC), ethyl methyl carbonate (EMC), ethylene carbonate (EC), propylene carbonate (PC), or the like may be used.

Among those listed above, the carbonate-based solvent is preferred, and a mixture of a cyclic carbonate-based compound with high ion conductivity and high permittivity (e.g., EC, PC, etc.) and a linear carbonate-based compound with low viscosity (e.g., EMC, DMC, DEC, etc.), which may increase the charging/discharging performance of a battery, is more preferred.

As the lithium salt, any compound that is able to provide lithium ions used in a lithium secondary battery may be used without particular limitation. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, $LiB(C_2O_4)_2$, or the like may be used. The lithium salt is preferably included at a concentration of about 0.6 mol% to 2 mol% in the electrolyte.

In addition to the above-described electrolyte components, the electrolyte may further include one or more additives such as pyridine, triethylphosphite, triethanolamine, cyclic ether, ethylenediamine, n-glyme, hexamethyl phosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, aluminum trichloride, and the like for the purpose of enhancing the lifetime characteristics of a battery, suppressing a decrease in battery capacity, enhancing the discharge capacity of a battery, or the like. In this case, the additives may be included in an amount of 0.1 to 5 wt% with respect to the total weight of the electrolyte.

The lithium secondary battery according to the present disclosure may be manufactured by interposing a separator between the positive electrode and the negative electrode to form an electrode assembly, placing the electrode assembly in a cylindrical battery case or a prismatic battery case, and injecting an electrolyte. Alternatively, the lithium secondary battery may be manufactured by stacking the electrode assembly, impregnating the same with an electrolyte, placing the resultant in a battery case, and sealing the battery case.

In the manufacture of the lithium secondary battery according to the present disclosure, the electrode assembly may be dried to remove one or more organic solvents selected from the group consisting of N-methyl-2-pyrrolidone (NMP), acetone, ethanol, PC, EMC, EC, and DMC, which are used in the manufacture of the positive electrode. When an electrolyte having the same components as the organic solvent used in the manufacture of the positive electrode is used, the process of drying the electrode assembly may be omitted.

As the battery case, any battery case that is typically used in the art may be used, and there is no limitation on an outer shape according to the purpose of the battery. For example, the outer shape of the battery case may be a cylindrical form using a can, a prismatic form, a pouch form, a coin form, or the like.

The lithium secondary battery according to the present disclosure is useful in the fields of portable devices such as mobile phones, laptop computers, digital cameras, and the like, energy storage systems (ESSs), and electric vehicles such as hybrid electric vehicles (HEVs) and the like due to stably exhibiting excellent discharge capacity, output characteristics, and a capacity retention rate.

Hereinafter, embodiments of the present invention will be described in further detail with reference to examples. However, the following examples are merely presented to exemplify the present invention, and the scope of the present invention is not limited to the following examples.

**Example 1: Preparation of positive electrode slurry composition**

$LiFePO_4$ having an average particle diameter $D_{50}$ of 2 $\mu$m and a BET specific surface area of 11 $m^2$/g and having a 200 nm-thick carbon coating layer on the surface thereof as a positive electrode active material, carbon black as a conductive material, polyvinylidene fluoride (PVdF) which is a homopolymer and has a weight-average molecular weight of 630,000 g/mol as a binder, and a hydrogenated nitrile butadiene rubber (H-NBR) as a dispersant were added to an N-methyl pyrrolidone solvent. Then, stirring was performed at 2500 rpm for 90 minutes using a stirrer (homo-dispersion) to prepare a positive electrode slurry composition. The positive electrode active material, conductive material, binder, and dispersant in the positive electrode slurry composition were present in a weight ratio of 93.6:3.0:2.2: 1.2, and a solid content of the positive electrode slurry composition was 59 wt%.

**Example 2: Preparation of positive electrode slurry composition**

A positive electrode slurry composition was prepared in the same manner as in Example 1, except that a positive electrode active material and a binder were mixed in a weight ratio of 93.3:2.5.

**Example 3: Preparation of positive electrode slurry composition**

A positive electrode slurry composition was prepared in the same manner as in Example 1, except that a positive electrode active material, a binder, and a dispersant were mixed in a weight ratio of 93.9:2.2:0.9.

**Comparative Example 1: Preparation of positive electrode slurry composition**

A positive electrode slurry composition was prepared in the same manner as in Example 1, except that modified PVdF which is not a homopolymer and has a weight-average molecular weight of 630,000 g/mol was used as a binder, and a solid content of a positive electrode slurry composition was 57 wt%.

[Table 1]

| | Solid content (wt%) | Content (wt%) | | | |
|---|---|---|---|---|---|
| | | Positive electrode active material | Conductive material | Binder | Dispersant |
| Example 1 | 59 | 93.6 | 3 | 2.2 | 1.2 |
| Example 2 | 59 | 93.3 | 3 | 2.5 | 1.2 |
| Example 3 | 59 | 93.9 | 3 | 2.2 | 0.9 |
| Comparative Example 1 | 57 | 93.6 | 3 | 2.2 | 1.2 |

**Experimental Example 1 - $^1$H NMR measurement of PVdF**

The $^1$H NMR of each PVdF used in Examples 1 to 3 and Comparative Example 1 was measured through nuclear magnetic resonance (NMR), and whether the PVdF satisfies Expression 1 below was determined.

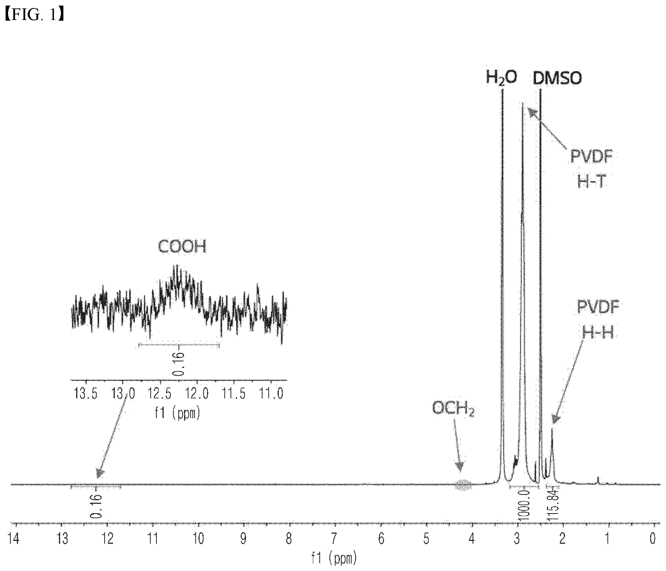

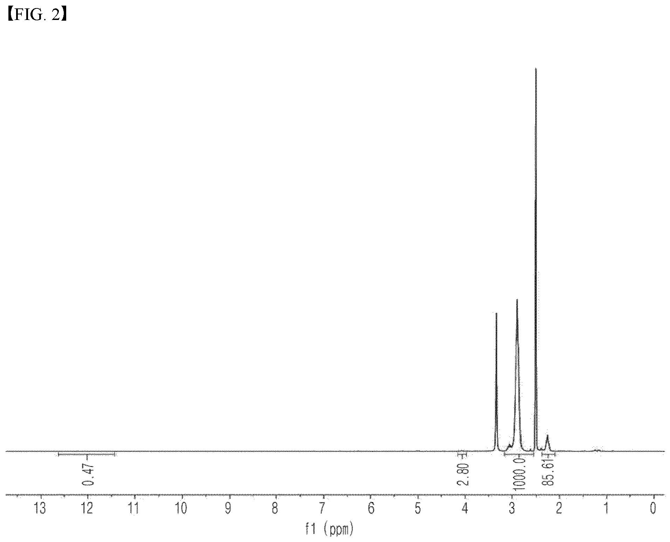

Specifically, the $^1$H NMR of PVdF added to each composition of Examples 1 to 3 and Comparative Example 1 was measured under conditions of ns=1k, dl=3s, pulse sequence zg30, a temperature of 298K, and a DMSO-$d_6$ solvent using an NMR instrument (Bruker 600 MHz commercially available from Bruker). Results thereof are shown in FIG. 1 and FIG. 2. In this case, FIG. 1 is the $^1$H NMR graph of PVdF used in Examples 1 to 3, and FIG. 2 is the $^1$H NMR graph of PVdF used in Comparative Example 1. Referring to FIG. 1 and FIG. 2, the integrated area (A) of a peak related to COOH, which appears at 11.5 ppm to 12.8 ppm, the integrated area (B) of a peak related to $OCH_2$, which appears at 3.9 ppm to 4.2 ppm, the integrated area (C) of a peak related to PVdF head-to-head, which appears at 2.6 ppm to 3.2 ppm, and the integrated area (D) of a peak related to PVdF head-to-tail, which appears at 2.1 ppm to 2.35 ppm, were calculated, whether the A, B, C, and D values satisfy the following Expression 1 was determined, and results thereof are shown as O or X (O: satisfied, X: not satisfied) in Table 2 below.

[Expression 1]

$$0 \leq \{(2A+B)/(C+D)\} \times 100 < 0.2$$

**Experimental Example 2 - Measurement of shear viscosity of positive electrode slurry composition**

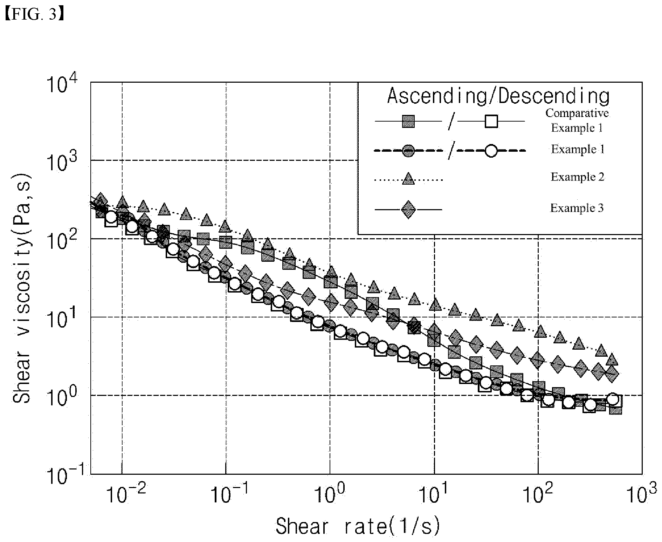

The shear viscosity of the positive electrode slurry compositions prepared in Examples 1 to 3 and Comparative Example 1 was measured using a rheometer (DHR2 commercially available from TA Instruments), and results thereof are graphically shown in FIG. 3 below. Specifically, 10 ml of the positive electrode slurry composition was input into a concentric cylinder-type accessory of the rheometer at 25 °C, then the shear viscosity thereof was measured, and results thereof are graphically shown in FIG. 3 below. FIG. 3 is a graph showing a result of measuring the shear viscosity of each positive electrode slurry composition prepared in Examples 1 to 3 and Comparative Example 1 according to a shear rate.

In this case, whether an inflection point appears on the graph of FIG. 3 in a shear rate range of $10^{-2.5}$ 1/s to $10^0$ 1/s was determined, and results thereof are shown as O or X (O: presence of inflection point, X: absence of inflection point) in the following Table 2. Here, the inflection point means a point at which, as a shear rate increases, shear viscosity increases or there is almost no change in shear viscosity. Generally, the positive electrode slurry composition exhibits a shear-thinning behavior in which shear viscosity decreases as a shear rate increases, and when particle agglomeration is present in the positive electrode slurry composition, the positive electrode slurry composition is able to exhibit a behavior in which, as a shear rate increases, shear viscosity increases or there is almost no change in shear viscosity on the shear viscosity graph due to the interaction of agglomerated particles.

[Table 2]

| | Binder (PVdF) | | Rheological properties of composition |
|---|---|---|---|
| | { (2A+B)/(C+D)} × 100 (%) | Whether Expression 1 is satisfied | Presence or absence of inflection point on shear viscosity graph |
| Example 1 | 0.028 | O | X |
| Example 2 | 0.028 | O | X |
| Example 3 | 0.028 | O | X |
| Comparative Example 1 | 0.344 | X | O |

Referring to Table 2 and FIG. 3, in the case of the positive electrode slurry composition of Comparative Example 1 in which PVdF included in the binder did not satisfy Expression 1, it can be confirmed that an inflection point appeared on the shear viscosity graph in a shear rate range of $10^{-2}$ 1/s to $10^{-1}$ 1/s unlike the positive electrode slurry compositions of Examples 1 to 3. Specifically, it can be seen that a decrease in shear viscosity relative to an increase in shear rate was very small in a shear rate range of $10^{-2}$ 1/s to $10^{-1}$ 1/s compared to other shear rate ranges. From the result, it can be assumed that particle agglomeration occurred in the positive electrode slurry composition of Comparative Example 1.

**Claims**

1.   A positive electrode slurry composition comprising:

a positive electrode active material, a binder, a dispersant, and a solvent,
wherein the positive electrode active material includes lithium iron phosphate having a carbon coating layer on the surface thereof, and
the binder includes polyvinylidene fluoride satisfying the following Expression 1,

[Expression 1]

$$0 \leq \{(2A+B)/(C+D)\} \times 100 < 0.2$$

wherein A, B, C, and D are integrated areas of respective peaks exhibited at 11.5 ppm to 12.8 ppm, 3.9 ppm to 4.2 ppm, 2.6 ppm to 3.2 ppm, and 2.1 ppm to 2.35 ppm as measured by $^1$H-NMR of the polyvinylidene fluoride.

2.   The positive electrode slurry composition of claim 1, wherein the lithium iron phosphate is a compound represented by Chemical Formula 1

[Chemical Formula 1]        $Li_{1+a}Fe_{1-x}M_x(PO_{4-b})X_b$

wherein, in Chemical Formula 1, M is any one or two or more elements selected from the group consisting of Al, Mg, Ni, Co, Mn, Ti, Ga, Cu, V, Nb, Zr, Ce, In, Zn, and Y, X is any one or two or more elements selected from the group consisting of F, S, and N, and a, b, and x satisfy $-0.5 \leq a \leq 0.5$, $0 \leq b \leq 0.1$, and $0 \leq x \leq 0.5$, respectively.

3.   The positive electrode slurry composition of claim 1, wherein the lithium iron phosphate has an average particle diameter $D_{50}$ of 0.8 $\mu$m to 20.0 $\mu$m.

4.   The positive electrode slurry composition of claim 1, wherein the positive electrode active material is included in an amount of 91.0 wt% to 98.0 wt% based on a total solid content of the positive electrode slurry composition.

5.   The positive electrode slurry composition of claim 1, wherein the binder is a homopolymer.

6.   The positive electrode slurry composition of claim 1, wherein the binder has a weight-average molecular weight of 20,000 g/mol to 1,200,000 g/mol.

7. The positive electrode slurry composition of claim 1, wherein the binder is included in an amount of 1.8 wt% to 4.0 wt% based on a total solid content of the positive electrode slurry composition.

8. The positive electrode slurry composition of claim 1, wherein the dispersant is a hydrogenated nitrile butadiene rubber.

9. The positive electrode slurry composition of claim 1, wherein the dispersant is included in an amount of 0.1 wt% to 2.0 wt% based on a total solid content of the positive electrode slurry composition.

10. The positive electrode slurry composition of claim 1, wherein a solid content in the positive electrode slurry composition is 40 wt% to 75 wt%.

11. A positive electrode comprising:

a positive electrode current collector and a positive electrode active material layer positioned on at least one surface of the positive electrode current collector,
wherein the positive electrode active material layer includes a positive electrode active material, a binder, and a dispersant,
wherein the positive electrode active material includes lithium iron phosphate having a carbon coating layer on the surface thereof, and
wherein the binder includes polyvinylidene fluoride satisfying the following Expression 1

[Expression 1]

$$0 \le \{(2A+B)/(C+D)\} \times 100 < 0.2$$

wherein A, B, C, and D are the integrated areas of respective peaks exhibited at 11.5 ppm to 12.8 ppm, 3.9 ppm to 4.2 ppm, 2.6 ppm to 3.2 ppm, and 2.1 ppm to 2.35 ppm as measured by $^1$H-NMR of the polyvinylidene fluoride.

12. A lithium secondary battery comprising:

a positive electrode, a negative electrode, a separator, and an electrolyte,
wherein the positive electrode includes a positive electrode active material, a binder, and a dispersant,
wherein the positive electrode active material includes lithium iron phosphate having a carbon coating layer on the surface thereof, and
wherein the binder includes polyvinylidene fluoride satisfying the following Expression 1

[Expression 1]

$$0 \le \{(2A+B)/(C+D)\} \times 100 < 0.2$$

wherein A, B, C, and D are the integrated areas of respective peaks exhibited at 11.5 ppm to 12.8 ppm, 3.9 ppm to 4.2 ppm, 2.6 ppm to 3.2 ppm, and 2.1 ppm to 2.35 ppm as measured by $^1$H-NMR of the polyvinylidene fluoride.

【FIG. 1】

【FIG. 2】

【FIG. 3】

## INTERNATIONAL SEARCH REPORT

| | International application No. |
|---|---|
| | **PCT/KR2022/020915** |

**A. CLASSIFICATION OF SUBJECT MATTER**

**H01M 4/36**(2006.01)i; **H01M 4/58**(2010.01)i; **H01M 4/52**(2010.01)i; **H01M 4/38**(2006.01)i; **H01M 4/62**(2006.01)i

According to International Patent Classification (IPC) or to both national classification and IPC

**B. FIELDS SEARCHED**

Minimum documentation searched (classification system followed by classification symbols)

H01M 4/36(2006.01); B05D 3/14(2006.01); H01M 10/0525(2010.01); H01M 4/04(2006.01); H01M 4/139(2010.01); H01M 4/58(2010.01); H01M 4/583(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode active material), 탄소 코팅층(carbon coating layer), 분산제 (dispersant), 폴리비닐리덴 플루오라이드(polyvinylidene fluoride)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0107758 A (LG CHEM, LTD.) 02 October 2018 (2018-10-02)<br>See paragraphs [0045], [0051], [0068], [0084] and [0092]; example 1; and claims 12-13. | 1-12 |
| Y | KR 10-2019-0051354 A (LG CHEM, LTD.) 15 May 2019 (2019-05-15)<br>See claim 1. | 1-12 |
| A | KR 10-2016-0111213 A (KOREA NATIONAL UNIVERSITY OF TRANSPORTATION INDUSTRY-ACADEMIC COOPERATION FOUNDATION) 26 September 2016 (2016-09-26)<br>See entire document. | 1-12 |
| A | KR 10-2013-0143151 A (DONGJIN SEMICHEM CO., LTD.) 31 December 2013 (2013-12-31)<br>See entire document. | 1-12 |
| A | US 2015-0188120 A1 (UT-BATTELLE, LLC) 02 July 2015 (2015-07-02)<br>See entire document. | 1-12 |

☐ Further documents are listed in the continuation of Box C.    ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 March 2023** | **29 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2" align="center">**INTERNATIONAL SEARCH REPORT**<br>**Information on patent family members**</td><td colspan="2">International application No.<br>**PCT/KR2022/020915**</td></tr>
</table>

| Patent document cited in search report | Publication date (day/month/year) | Patent family member(s) | Publication date (day/month/year) |
|---|---|---|---|
| KR 10-2018-0107758 A | 02 October 2018 | CN 110431697 A | 08 November 2019 |
| | | CN 110431697 B | 19 July 2022 |
| | | KR 10-2323808 B1 | 10 November 2021 |
| | | US 11283058 B2 | 22 March 2022 |
| | | US 2020-0295347 A1 | 17 September 2020 |
| | | WO 2018-174619 A1 | 27 September 2018 |
| KR 10-2019-0051354 A | 15 May 2019 | None | |
| KR 10-2016-0111213 A | 26 September 2016 | KR 10-1682381 B1 | 05 December 2016 |
| KR 10-2013-0143151 A | 31 December 2013 | None | |
| US 2015-0188120 A1 | 02 July 2015 | US 2013-0108776 A1 | 02 May 2013 |
| | | US 8956688 B2 | 17 February 2015 |
| | | US 9685652 B2 | 20 June 2017 |

Form PCT/ISA/210 (patent family annex) (July 2022)

**REFERENCES CITED IN THE DESCRIPTION**

**Patent documents cited in the description**

- KR 1020210187191
- KR 1020220178234